# EUROPÄISCHE PATENTSCHRIFT

(11) **EP 0 870 963 B1**
(45) Veröffentlichungstag und Bekanntmachung des Hinweises auf die Patenterteilung: **06.09.2006**
(21) Anmeldenummer: 98104752.5
(22) Anmeldetag: 17.03.1998
(51) Int. Cl.: F16L 7/00, G02B 6/44, H02G 9/06, H02G 3/04, F16L 3/26, F16L 9/12

(54) **Rohr aus polymerem Werkstoff**
Polymeric pipe
Tuyau en polymère

(30) Priorität: 11.04.1997 DE 29706513 U
(43) Veröffentlichungstag der Anmeldung: 14.10.1998
(73) Patentinhaber: REHAU AG + Co, 95111 Rehau (DE)
(72) Erfinder: Elter, Max, 95111 Rehau (DE)

(56) Entgegenhaltungen:
- EP-A- 0 326 711
- EP-A- 0 359 128
- DE-A- 4 133 415
- US-A- 3 240 233
- PATENT ABSTRACTS OF JAPAN vol. 016, no. 015 (P-1298), 14. Januar 1992 (1992-01-14) & JP 03 233505 A (HITACHI CABLE LTD), 17. Oktober 1991 (1991-10-17)

## Beschreibung

Die Erfindung betrifft ein Rohr aus polymerem Werkstoff zur Aufnahme von Einzügen wie Kabel, Lichtwellenleiter, Rohre und dergleichen, wobei der innere Rohrumfang eine rippenartige Struktur aufweist, welche durch Nuten gebildet ist.

Aus der DE 38 02 493 C1 ist ein gattungsgemäßes Rohr bekannt, dessen innerer Rohrumfang an seiner Oberfläche gleitfähig gemacht ist. Zu diesem Zweck ist das Rohr aus zwei konzentrischen Polymerschichten aufgebaut. Die innere, dünnere Polymerschicht ist dabei mit einer definierten Menge reibungsmindernder Additive versetzt. Sie weist darüber hinaus eine rippenartige Struktur auf, in welche diese Additive eingelagert sind. Die in dieses Rohr eingezogenen Kabel und dergleichen gleiten dabei auf den Spitzen der Profilierung, wobei dieses Gleiten durch die in die Innenschicht eingelagerten Additivanteile positiv unterstützt wird.

Aus der DE 38 30 942 C2 ist ein weiteres gattungsgemäßes Kunststoffrohr zur Aufnahme von Einzügen bekannt, welches mit einer inneren Rohrschicht ausgestattet ist, der bei der Fertigung ein Gleitmittel in Form von Silikonöl beigegeben ist. Diese innere Rohrschicht besitzt eine Innenprofilierung, in welche Rippen eingearbeitet sind, welche im Querschnitt dreieckförmig, trapezförmig oder wellenförmig ausgebildet sein können.

Aus der DE-A-4133415 ist eine Kabelführungseinrichtung mit zumindest einem Kabelführungsrohr aus thermoplastischem Kunststoff bekannt, welches einen im Querschnitt runden Kabelführungskanal und eine Kanalinnenwand mit zueinander pararellen Rillen und zwischen den Rillen stehenden Rippen aufweist, wobei in den Rillen ein fließfähiges, die Kanalinnenwand benetzendes Gleitmittel angeordnet ist, welches eine vorgegebene Viskosität sowie eine vorgegebene Oberflächenspannung aufweist und wobei die Rillentiefe sowie die Rillenbreite der Rillen so eingerichtet sind, dass das Gleitmittel unter dem Einfluss seiner Oberflächenspannung und Viskosität sowie unter Einfluss der Benetzungskräfte in den dadurch als Gleitmittelaufnahmerillen funktionierenden Rillen rillenfüllend festgehalten ist.

In den Gleitmittelaufnahmerillen sind Gleitmittel aus der Gruppe Glycerin-Caprylat, Caprat, Schicht-Silikat, Triglycerid aus mittelkettigen Fettsäuren, Silikone oder Mischungen davon angeordnet. Die Gleitmittelaufnahmerillen der D1 weisen eine Rillentiefe im Bereich von 0,1 - 1,0 mm und eine maximale Rillenbreite von 0,3 - 3,0 mm auf. Die Gleitmittelaufnahmerillen und die Rippen sind schraubenwendelförmig oder alternierend oder wellenförmig und/oder zickzackförmig verlaufend angeordnet.

Aus der JP 032 33 505 ist ein weiteres gattungsgemäßes Rohr bekannt. Dieses Rohr weist in seinem Inneren mehrfach spiralförmig angeordnete Riefen einer definierten Richtung auf, welche eine Zwangsführung der in das Rohr einzubringenden Einzüge wie Kabel, Lichtwellenleiter und dergl. bewirken. Durch die spiralförmigen Riefen wird eine Drehkraft erzeugt, so dass sich die eingebrachten Einzüge spiralförmig in dem Rohr vorwärts bewegen und somit eine schnelle Verlegung auch über längere Entfernungen möglich sein soll.

Weitere Rohre dieser Art besitzen Variationen in der Richtung der Gleitrippen, wie in der DE 35 29 541 A1 beschrieben, oder zeigen Variationen der Rippengeometrie, z. B. DE 35 39 304.

Die Rohre des bekannten Standes der Technik werden ergänzt durch Rohre mit glatter Innenfläche, welche beim Einzug von Kabeln mit Seilzugwinden optimale Reibungswerte bringen bei einem minimalen Kabelabrieb.

Die Rohre mit der gerieften Innenfläche nach dem Stand der Technik ergeben dagegen verbesserte Reibungswerte beim Einblasen von leichten Koaxialkabeln sowie Glasfaserkabeln und ähnlichen. Als besonderer Nachteil ist bei diesem Verfahren aber zu werten, daß bei solchen Einzügen der Abrieb entweder am Kabelmantel oder an den Rohrrippen vergrößert wird. Sind beispielsweise die Rippen des Schutzrohres aus hart eingestelltem Polymermaterial, vergrößert sich der Abrieb am Kabelmantel. Sind dagegen die Rippen am Rohrumfang aus weich eingestelltem Polymermaterial, so vergrößert sich beim Einschießen der Kabel der Abrieb an den Rohrrippen. Auf jeden Fall ist dieser Abrieb schädlich, denn die abgeriebenen Polymerpartikel bleiben im Rohrinneren, können sich dort an beliebigen Stellen ablagern, wobei die zwischen den Rippen liegenden Riefen mit losen Polymerpartikeln gefüllt werden und in dieser Form als Bremse beim Einzug der Kabel wirken können.

Hier setzt die Erfindung ein, die es sich zur Aufgabe gestellt hat, die geringe Gleitreibung und den geringen Kabelmantelabrieb der Rohre mit glatten Innenflächen mit den Vorteilen der Kabelrohre mit gerieften Innenflächen beim Einblasen von Glasfaserkabeln und leichten Koaxialkabeln zu kombinieren. Erfindungsgemäß wird dies durch die kennzeichnenden Merkmale des Anspruches 1 gelöst. Erfindungsgemäß wird dazu weiter vorgeschlagen, daß der innere glatte Rohrumfang in Teilsegmente aufgeteilt ist, welche durch zwischen den Teilsegmenten angeordnete Nuten voneinander getrennt sind.

Die Teilsegmente bilden dabei Teilbereiche der glatten Rohrinnenfläche, d. h., sie bilden keine spitze oder abgerundete Rippenform. Das einzublasende Kabel liegt also beim Einblasvorgang an dem zugeordneten Teilbereich der glatten Rohrinnenfläche an, wobei es sich hier stets um eine linienförmige Anlage handelt. Damit ist das Minimum an Gleitreibung und Kabelmantelabrieb erreicht, das bei den Rohren mit insgesamt glatter Innenfläche zum Stand der Technik beschrieben wurde.

Durch die erfindungsgemäße Anordnung der zwischen diesen Teilbereichen der glatten Rohrinnenfläche ausgebildeten Nuten wird dagegen stets gewährleistet, daß ein Eindringen der eingeblasenen Preßluft unter das Kabel und damit die Erzeugung des Luftkissens unter dem Kabel gewährleistet wird. Damit sind die Vorteile der innen gerieften Kabelschutzrohre mit den Vorteilen der Kabelschutzrohre mit glatter Innenfläche erfindungsgemäß kombiniert.

Vorteilhaft besteht das Abmessungsverhältnis zwischen den Teilsegmenten und den Nuten zwischen 1,5:1 bis 5:1. Auf diese Weise können Kabel unterschiedlichster Durchmesser mit den erfindungsgemäßen Vorteilen des minimierten Abriebs bei hoher Einblaslänge in die Schutzrohre eingeblasen werden.

In einer vorteilhaften Ausführungsform ist der innere Rohrumfang mit den durch die Nuten getrennten Teilsegmenten eine Schicht aus hart eingestelltem polymerem Werkstoff. Bei diesem mehrschichtigen Aufbau des Rohrwandquerschnitts wird das Innenrohr im Bereich der Teilsegmente und Nuten aus einem harten Polyethylen hoher Dichte im Koextrusionsverfahren hergestellt. Durch diese Maßnahme ist eine weitere Verringerung der Gleitreibung und damit des Kabelmantelabriebs beim Kontakt des eingeblasenen Kabels mit der als Teilsegment einer glatten Rohrinnenfläche ausgeführten Teilfläche mit relativ breitem Auflagebereich gewährleistet.

Die erfindungsgemäß ausgestaltete Innenfläche des Schutzrohres ergibt in optimaler Weise eine Kombination zwischen den positiven Merkmalen der Schutzrohre mit glatter Innenfläche mit den Schutzrohren der mit Rippen profilierter Innenfläche. Dabei bewirkt die verringerte Gleitreibung bei der glatten Rohrinnenfläche - verwirklicht durch die Teilsegmente - einen minimierten Abrieb des Kabelmantels bei gleichzeitiger, durch die Nuten unterstützter Luftkissenbildung unter dem Kabel, wodurch die Einschießlänge eines solchen Kabels extrem erhöht wird.

In der Zeichnung sind Ausführungsbeispiele des erfindungsgemäßen Rohres schematisch dargestellt; es zeigt:
- Fig. 1: einen Querschnitt durch ein Schutzrohr mit eingezogenen Kabeln.
- Fig. 2: Abmessungsverhältnisse von Teilsegment und Nut in verschiedenen Ausführungen.

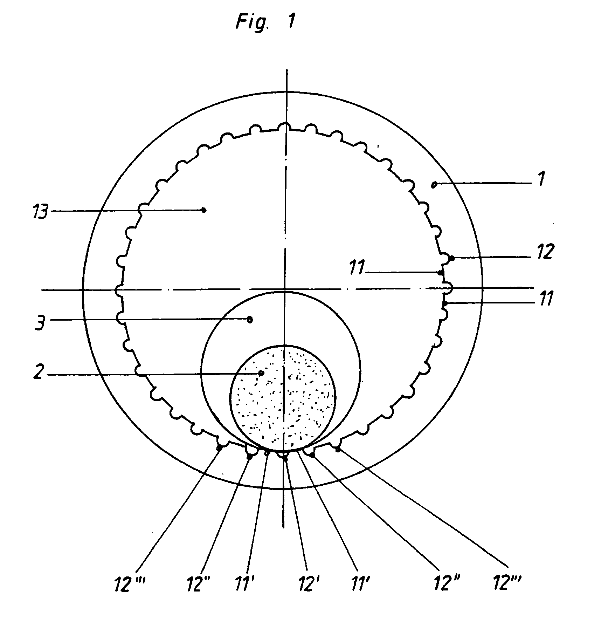

Fig. 1 zeigt das Schutzrohr 1 mit einem einschichtigen Wandquerschnitt. Am inneren Umfang sind regelmäßig verteilt die Teilsegmente 11 angeordnet, die jeweils durch Nuten 12 voneinander getrennt sind.

In das Lumen 13 des Schutzrohres 1 sind die Kabel 2, 3 mit unterschiedlichem Querschnitt eingebracht. Das Kabel 2 hat beispielsweise einen Durchmesser d von 12 mm, während das Kabel 3 einen solchen von 20 mm hat. Das Kabel 2 liegt dabei auf den Teilsegmenten 11' auf und überdeckt die Nut 12'. Beim Einblasen von Preßluft gelangt diese auch in die Nut 12', wodurch das Kabel 2 in das Lumen 13 des Schutzrohres 1 hineingehoben und auf einem Luftkissen getragen wird. Unterstützt wird dieser Vorgang noch durch die Luft, die durch die benachbarten Nuten 12'' seitlich am Kabel 2 entlang streift. Auf diese Weise wird der Abrieb des Kabelmantels minimiert und die eingesetzte Preßluft wird optimal zum Transport des Kabels 2 im Lumen 13 des Schutzrohres 1 ausgenutzt.

Beim Kabel 3 läuft dieser Vorgang analog ab. Das Kabel 3 liegt in vollem Umfang auf den Teilsegmenten 11' auf, was durch seinen größeren Querschnitt gegenüber dem Kabel 2 selbstverständlich ist. Die Preßluft aus den Nuten 12' und 12'' hebt das Kabel 3 - wie zum Kabel 2 beschrieben - in das Lumen 13 des Schutzrohres ein. Unterstützt wird diese Bewegung zusätzlich durch den Luftstrom aus den Nuten 12''', der am Kabelmantel des Kabels 3 entlang streicht, und auf diese Weise das Schwebeverhalten des Kabels 3 verbessert.

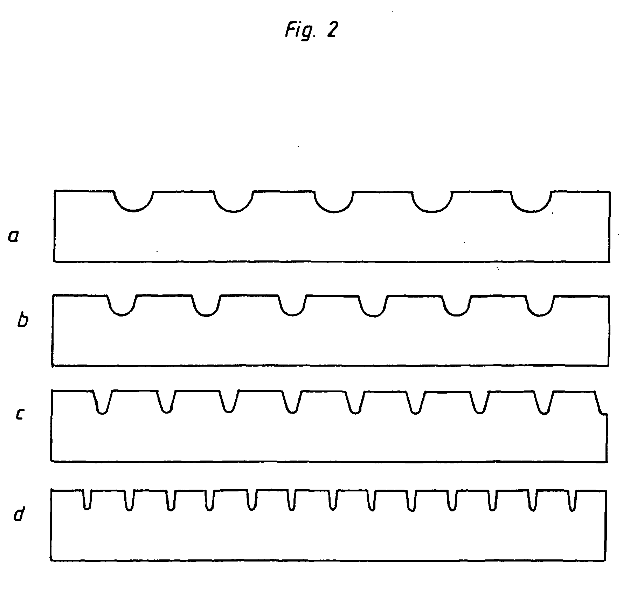

Fig. 2 zeigt die Abmessungsverhältnisse von Teilsegment 11 und Nut 12 in verschiedenen Ausführungen. Bei a ist das Abmessungsverhältnis von 1,5:1 gezeigt. Dieses Verhältnis wird zweckmäßigerweise nur dort eingesetzt, wo Kabel mit großem Durchmesser in Schutzrohre eingezogen werden müssen.

Bei b ist das Verhältnis zwischen Teilsegment 11 und Nut 12 von 2:1 gezeigt. Auch dieses Abmessungsverhältnis sollte zweckmäßigerweise nur dann angewendet werden, wenn Kabel größerer Durchmesser eingezogen werden. In beiden Fällen würde bei Kabeln kleinerer Durchmesser die Tragluft in der Regel nicht unter dem Kabel angreifen, wie es im optimalen Fall sein sollte, sondern würde seitlich am Kabelmantel vorbeistreichen, wodurch die angestrebte Schwebewirkung nur unzureichend erzielbar wäre.

Bei c und d sind die Abmessungsverhältnisse 3:1 und 5:1 gezeigt.

Mit diesen Verhältnissen können auch kleinere Kabeldurchmesser in optimaler Weise in das Lumen 13 des Schutzrohres 1 gehoben werden, da hier aufgrund der gewählten Abmessungsverhältnisse der Luftstrom aus den Nuten 12 direkt unter das Kabel gelangt und damit die Anhebewirkung optimiert ist.

Die erfindungsgemäßen Teilsegmente 11 mit den sie trennenden Nuten 12 sind in ihrer Richtung variabel. Sie können axial auf die volle Länge des Schutzrohres 1 ausgerichtet sein.

## Patentansprüche

1. Rohr aus polymerem Werkstoff zur Aufnahme von Einzügen wie Kabel (2, 3), Lichtwellenleiter, Rohre und dergleichen, wobei der innere Rohrumfang eine rippenartige Struktur aufweist, welche durch Nuten gebildet ist,
**dadurch gekennzeichnet,**
**dass** der innere, glatte Rohrumfang axial in Teilsegmente (11) aufgeteilt ist, wobei die Teilsegmente (11) Teilbereiche der glatten Rohrinnenfläche bilden, so dass sie keine spitze oder abgerundete Rippenform bilden, welche durch zwischen den Teilsegmenten (11) axial angeordnete, an sich bekannte Nuten (12) voneinander getrennt sind, so dass sich bei Eindringen von eingeblasener Pressluft unter den Einzügen wie Kabel (2, 3) Lichtwellenleiter, Rohre und dergleichen ein Luftkissen bildet und wobei das Abmessungsverhältnis zwischen den Teilsegmenten (11) und den Nuten (12) zwischen 1,5 : 1 bis 5 : 1 beträgt.

2. Rohr nach Anspruch 1, **dadurch gekennzeichnet, dass** das Abmessungsverhältnis zwischen den Teilsegmenten (11) und der Tiefe der Nut (12) etwa 2 : 1 beträgt.

3. Rohr nach Anspruch 1, **dadurch gekennzeichnet, dass** die Teilsegmente (11) und die Nuten (12) axial über die volle Länge des Rohres (1) ausgerichtet sind.

4. Rohr nach Anspruch 1, **dadurch gekennzeichnet, dass** der innere Rohrumfang mit den durch die Nuten (12) getrennten Teilsegmente (11) eine Schicht aus hart eingestelltem polymerem Werkstoff ist.

## Claims

1. Tube of polymeric material for receiving inserts such as cables (2, 3), optical fibre cables, pipes and the like, the inner circumference of the tube having a rib-like structure, which is formed by grooves, **characterized in that** the inner, smooth circumference of the tube is axially divided into partial segments (11), the partial segments (11) forming partial regions of the smooth inner surface of the tube, so as not to form a pointed or rounded rib form, which are separated from one another by grooves (12) known per se arranged axially between the partial segments (11), so that, when compressed air that is blown in forces its way in, an air cushion forms under the inserts, such as cables (2, 3), optical fibre cables, pipes and the like, and the dimensional ratio between the partial segments (11) and the grooves (12) being between 1.5 : 1 and 5 : 1.

2. Tube according to Claim 1, **characterized in that** the dimensional ratio between the partial segments (11) and the depth of the groove (12) is approximately 2 : 1.

3. Tube according to Claim 1, **characterized in that** the partial segments (11) and the grooves (12) are axially aligned over the full length of the tube (1).

4. Tube according to Claim 1, **characterized in that** the inner circumference of the tube with the partial segments (11) separated by the grooves (12) is a layer of polymeric material with a low plasticizer content.

## Revendications

1. Tuyau en matériau polymère pour recevoir des amenées telles que des câbles (2, 3), des guides d'ondes optiques, des tubes et similaires, la périphérie intérieure du tuyau présentant une structure cannelée qui est formée par des rainures,
**caractérisé en ce que**
la périphérie lisse intérieure du tuyau est divisée axialement en segments partiels (11), les segments partiels (11) formant des régions partielles de la surface lisse intérieure du tuyau, de telle sorte qu'ils ne forment pas de forme de cannelure pointue ou arrondie, lesquelles régions partielles sont séparées les unes des autres par des rainures connues en soi (12) disposées axialement entre les segments partiels (11), de sorte que lors de la pénétration d'air de pression soufflé sous les amenées telles que des câbles (2, 3), des guides d'ondes optiques, des tubes et similaires, il se forme un coussin d'air et le rapport dimensionnel entre les segments partiels (11) et les rainures (12) étant compris entre 1,5:1 et 5:1.

2. Tuyau selon la revendication 1, **caractérisé en ce que** le rapport dimensionnel entre les segments partiels (11) et la profondeur des rainures (12) est d'environ 2:1.

3. Tuyau selon la revendication 1, **caractérisé en ce que** les segments partiels (11) et les rainures (12) sont orientés axialement sur toute la longueur du tuyau (1).

4. Tuyau selon la revendication 1, **caractérisé en ce que** la périphérie intérieure du tuyau avec les segments partiels (11) séparés par les rainures (12) est une couche de matériau polymère rendu dur.
